# EUROPEAN PATENT APPLICATION

(11) **EP 4 625 121 A1**
(43) Date of publication of application: **01.10.2025**
(21) Application number: 23895091.9
(22) Date of filing: 24.11.2023
(51) Int. Cl.: G06F 3/041, G09G 5/00

(54) **TOUCH SENSING DEVICE AND METHOD**

(30) Priority: 25.11.2022 KR 20220160491
(71) Applicant: LX Semicon Co., Ltd., Daejeon 34027 (KR)
(72) Inventor: LIM, Yang Been, Daejeon 34027 (KR); LEE, Heon, Daejeon 34027 (KR)
(74) Representative: Ter Meer Steinmeister & Partner
(86) International application number: PCT/KR2023/019164
(87) International publication number: WO 2024/112164

(57) **Abstract**

The present disclosure relates to a touch sensing apparatus and method capable of reducing jitter occurring when drawing a straight line among touch drawing events, the touch sensing apparatus may include a sensing signal processor configured to detect raw data corresponding to a touch drawing event of the touch panel and a controller configured to generate touch data by predicting a motion vector of touch coordinates based on the detected raw data, wherein the controller may calculate touch coordinates of the raw data when the raw data is input, generate a straight line connecting any two touch coordinates among the calculated touch coordinates, count a number of inlier touch coordinates positioned within a reference range from the straight line, select a suitable straight line based on the number of inlier touch coordinates, and determine a touch coordinate closest to the selected suitable straight line as a predicted coordinate to predict the motion vector of the touch coordinates.

## Description

### TECHNICAL FIELD

The present disclosure relates to a touch sensing apparatus configured to sense a touch drawing event of a touch panel, and to a touch sensing apparatus and method capable of reducing jitter occurred when drawing a straight line among touch drawing events.

### BACKGROUND

In general, touch-sensing technology is a technology for recognizing a user's input operation by sensing a signal that is generated when an object is close to or is in contact with a touch panel including a sensor.

Various types such as a magnetic type, a resistive type, and a capacitive type are used in the touch-sensing technology, but the capacitive type has become popular in recent years.

A plurality of sensors are disposed in the touch panel, and the wider an area of the touch panel or the higher a resolution of the touch panel, more sensors may be disposed in the touch panel.

A user may generate a touch drawing event by touching the touch panel using a finger or ballpoint pen-shaped touch pen, and the touch sensing apparatus may sense the touch drawing event generated on the touch panel to acquire touch coordinate information.

When acquiring touch coordinate information corresponding to the touch drawing event, the touch sensing apparatus may analyze touch raw data converted to digital data and predict a motion vector of current touch coordinates corresponding to the touch drawing event to find a predicted vector.

However, in the touch sensing apparatus, when there is noise in the current touch coordinates, accuracy of the predicted vector may be decreased and jitter of the touch coordinates may be increased.

In particular, in the case of a straight line drawing event among the touch drawing events, there was a problem that touch coordinates positioned in outliers outside a reference range among the touch coordinates act as noise, thereby significantly decreasing the accuracy of the predicted vector and increasing straight line drawing jitter.

Therefore, it is necessary to develop a touch sensing apparatus capable of reducing straight line drawing jitter by increasing accuracy of a predicted vector corresponding to straight line drawing during the straight line drawing event of the touch panel in the future.

### SUMMARY

### Technical Problem

The present disclosure is directed to solving the above-described problems and other problems.

The present disclosure is directed to providing a touch sensing apparatus and method capable of increasing accuracy of a predicted vector corresponding to straight line drawing and reducing straight line drawing jitter by selecting a suitable straight line from a straight line connecting any two touch coordinates corresponding to the straight line drawing based on a number of inlier touch coordinates positioned within a reference range and a sum of distances between the straight line and the inlier coordinates and predicting a motion vector of the touch coordinates.

### Technical Solution

A touch sensing apparatus according to an embodiment of the present disclosure is a touch sensing apparatus configured to process a touch of a touch panel, the touch sensing apparatus may include a sensing signal processor configured to detect raw data corresponding to a touch drawing event of the touch panel and a controller configured to generate touch data by predicting a motion vector of touch coordinates based on the detected raw data, wherein the controller may calculate touch coordinates of the raw data when the raw data is input, generate a straight line connecting any two touch coordinates among the calculated touch coordinates, count a number of inlier touch coordinates positioned within a reference range from the straight line, select a suitable straight line based on the number of inlier touch coordinates, and determine a touch coordinate closest to the selected suitable straight line as a predicted coordinate to predict the motion vector of the touch coordinates.

A display device according to an embodiment of the present disclosure may include a touch panel and a touch sensing apparatus configured to detect raw data corresponding to a touch drawing event of the touch panel to predict a motion vector of touch coordinates, wherein the touch sensing apparatus may calculate touch coordinates of the raw data when the raw data is input, generate a straight line connecting any two touch coordinates among the calculated touch coordinates, count a number of inlier touch coordinates positioned within a reference range from the straight line, select a suitable straight line based on the number of inlier touch coordinates, and determine a touch coordinate closest to the selected suitable straight line as a predicted coordinate to predict the motion vector of the touch coordinates.

A touch sensing method according to an embodiment of the present disclosure is a touch sensing method of a touch sensing apparatus configured to process a touch of a touch panel, the touch sensing method may calculate detecting raw data corresponding to a touch drawing event of the touch panel, preprocessing the raw data, calculating touch coordinates of the raw data, generating a straight line connecting any two touch coordinates among the calculated touch coordinates, counting a number of inlier touch coordinates positioned within a reference range from the straight line to select a suitable straight line based on the number of the inlier touch coordinates, determining a touch coordinate closest to the selected suitable straight line as a predicted coordinate to predict a motion vector of the touch coordinates, and generating touch data corresponding to the touch drawing event based on the predicted motion vector.

### Advantageous Effects

According to an embodiment of the present disclosure, the touch sensing apparatus can increase an accuracy of a predicted vector corresponding to straight line drawing and reduce straight line drawing jitter by selecting an adapted straight line from a straight line connecting any two touch coordinates corresponding to the straight line drawing based on a number of inlier touch coordinates positioned within a reference range and a sum of distances between the straight line and the inlier coordinates and predicting a motion vector of the touch coordinates.

### BRIEF DESCRIPTION OF THE DRAWINGS

FIG. 1 is a diagram for describing a display device according to an embodiment of the present disclosure;
FIG. 2 is a diagram for describing a touch sensing apparatus of a display device according to an embodiment of the present disclosure;
FIGS. 3 to 6 are diagrams for describing a controller of a touch sensing apparatus according to an embodiment of the present disclosure;
FIGS. 7 and 8 are diagrams for describing a method of predicting a motion vector of touch coordinates according to an embodiment of the present disclosure;
FIG. 9 is a diagram for describing an effective distance between touch coordinates in a touch coordinate dataset according to an embodiment of the present disclosure;
FIG. 10 is a diagram for describing a method for selecting a suitable straight line according to an embodiment of the present disclosure;
FIG. 11 is a diagram for describing a method for selecting a suitable straight line according to another embodiment of the present disclosure; and
FIGS. 12 and 13 are diagrams for describing a touch sensing method of a touch sensing apparatus according to an embodiment of the present disclosure.

### DETAILED DESCRIPTION OF THE EMBODIMENTS

Hereinafter, the embodiment disclosed in the present specification will be described in detail with reference to the accompanying drawings, but the same or similar components are designated by the same reference numerals regardless of drawing numbers, and repeated description thereof will be omitted. The component suffixes "module" and "part" used in the following description are given or mixed together only considering the ease of creating the specification, and have no meanings or roles that are distinguished from each other by themselves. In addition, in describing the embodiments disclosed in the present specification, when it is determined that detailed descriptions of a related well-known art unnecessarily obscure gist of the embodiments disclosed in the present specification, the detailed description thereof will be omitted. Further, the accompanying drawings are merely for facilitating understanding of the embodiments disclosed in the present specification, the technological scope disclosed in the present specification is not limited by the accompanying drawings, and it should be understood as including all modifications, equivalents and alternatives that fall within the spirit and scope of the present disclosure.

Terms including ordinal numbers, such as first, second, etc., may be used to describe various components, but the components are not limited by the terms. The terms are only used to distinguish one component from another.

It will be understood that when a component is referred to as being "connected" or "coupled" to another component, it may be directly connected or coupled to the other component, but intervening components may be present therebetween. In contrast, it should be understood that when a component is referred to as being "directly connected" or "directly coupled" to another component, there are no other intervening components present.

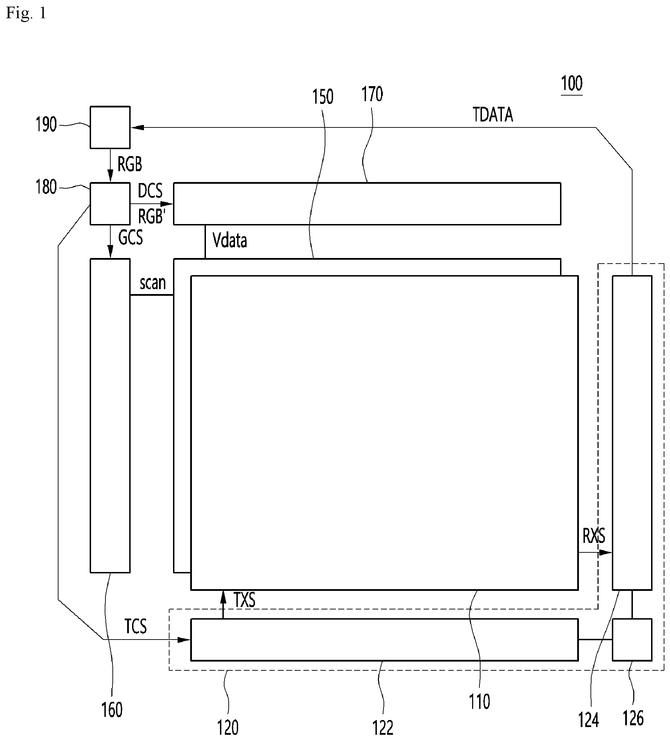

FIG. 1 is a diagram for describing a display device according to an embodiment of the present disclosure.

As shown in FIG. 1, a display device 100 may include a display panel 150, a gate driver 160, a data driver 170, a data processor 180, a host 190, a touch panel 110, a touch sensing apparatus 120, and the like.

The data driver 170, the gate driver 160, and the touch sensing apparatus 120 may drive at least one component included in the display panel 150 or the touch panel 110.

That is, the data driver 170 may drive a data line connected to a pixel in the display panel 150, the gate driver 160 may drive a gate line connected to a pixel, and the touch sensing apparatus 120 may drive touch electrodes disposed on the touch panel 110.

The data driver 170 may supply a data voltage Vdata to the data line in order to display an image in each pixel of the display panel 150.

The data drive device 170 may include at least one data driver integrated circuit, which may be connected to a bonding pad of the display panel 150 through a tape automated bonding (TAB) method or a chip on glass (COG) method, may be directly formed on the display panel 150, or may be formed by being integrated into the display panel 150 in some cases.

In addition, the data driver 170 may be implemented using a chip on film (COF) method.

Next, the gate driver 160 may supply a scan signal (scan) to the gate line to turn on/off a transistor positioned in each pixel. The gate driver 160 may be positioned on only one side of the display panel 150 as shown in FIG. 1 or may be divided into two and positioned on both sides of the display panel 150 according to a driving method.

In addition, the gate driver 160 may include at least one gate driver integrated circuit which may be connected to the bonding pad of the display panel 150 using the tape automated bonding (TAB) method or the chip on glass (COG) method, may be directly formed on the display panel 150 by being implemented using a gate in panel (GIP) method, or may be formed by being integrated into the display panel 150 in some cases.

In addition, the gate driver 160 may be implemented using the chip on film (COF) method.

The data processor 180 may receive image data (RGB) from the host 190, convert the image data into a format that the data driver 170 may recognize, and transmit the converted image data (RGB') to the data driver 170.

In addition, since the data processor 180 may control a timing of each driving device 160, 170, and 120 through control signals GCS, DCS, and TCS, the data processor 180 is also referred to a timing controller.

Next, a plurality of touch electrodes may be disposed on the touch panel 110, and the touch electrodes may include a driving electrode line to which a driving signal is applied and a sensing electrode line for sensing a touch signal.

Here, the touch sensing apparatus 120 may transmit a driving signal TXS to the driving electrode line and receive a sensing signal RXS from the sensing electrode line to generate touch data TDATA.

In addition, the touch sensing apparatus 120 may transmit the touch data TDATA to the host 190.

In addition, the driving electrode line and the sensing electrode line may be the same electrode or may be different electrodes.

In the present disclosure, an embodiment in which the driving electrode line and the sensing electrode line are coupled to each other by capacitance as different electrodes is described, but the embodiment is not limited thereto.

The touch sensing apparatus 120 may include a touch driver 122, a sensing signal processor 124, and a controller 126.

Here, the touch driver 122 may transmit the driving signal TXS to the driving electrode line of the touch panel, the sensing signal processor 124 may receive the sensing signal RXS from the sensing electrode line, and the controller 126 may transmit a timing signal to the touch driver 122 and the sensing signal processor 124.

The touch sensing apparatus 120 of the present disclosure may detect raw data corresponding to a touch drawing event of the touch panel to predict a motion vector of touch coordinates.

That is, the touch sensing apparatus 120 of the present disclosure may calculate touch coordinates of the raw data when the raw data is input, generate a straight line connecting any two touch coordinates among the calculated touch coordinates, count a number of inlier touch coordinates positioned within a reference range from the straight line, select a suitable straight line based on the number of inlier touch coordinates, and determine a touch coordinate closest to the selected suitable straight line as a predicted coordinate to predict the motion vector of the touch coordinates.

Here, the touch sensing apparatus 120 may preprocess the raw data when the raw data is input and then calculate the touch coordinates based on the preprocessed touch data.

As an example, when preprocessing raw data, the touch sensing apparatus 120 may acquire touch intensity data from the input raw data, label the touch intensity data, and perform finger separation based on the labeled touch intensity data.

In addition, when calculating the touch coordinate based on the preprocessed touch data, the touch sensing apparatus 120 may track the touch coordinates to correct the touch coordinates and smooth the corrected touch coordinates to predict the motion vector of the touch coordinates.

Here, when correcting the touch coordinates, the touch sensing apparatus 120 may generate a plurality of straight lines connecting any two touch coordinates among the calculated touch coordinates, determine the suitable straight line among the plurality of straight lines, and correct the touch coordinates based on the determined suitable straight line.

As an example, when determining the suitable straight line, the touch sensing apparatus 120 may determine the suitable straight line based on at least one of a first determination condition for selecting a straight line having a large number of inlier touch coordinates positioned around the straight line and a second discrimination condition for selecting a straight line having a large number of inlier touch coordinates positioned close to the straight line.

In some cases, the touch sensing apparatus 120 may determine the suitable straight line based on a third determination condition for selecting a straight line having a long length.

Next, when predicting the motion vector of the touch coordinates, the touch sensing apparatus 120 may interpolate touch data corresponding to the touch drawing event based on the predicted motion vector and generate touch data corresponding to an actual touch drawing event based on the interpolated touch data.

In addition, when generating the straight line, the touch sensing apparatus 120 may calculate a distance between a currently received touch coordinate and a most recently received touch coordinate from a pre-stored touch coordinate dataset when receiving the calculated touch coordinates and generate the straight line connecting any two touch coordinates among the touch coordinates of the touch coordinate dataset when the calculated distance is greater than a threshold distance of a preset dataset.

That is, the touch sensing apparatus 120 may store touch coordinates greater than the threshold distance of the preset dataset in the dataset and discard touch coordinates less than the threshold distance of the preset dataset without storing in the dataset.

Therefore, the touch sensing apparatus 120 may update the touch coordinate dataset only with touch coordinates greater than the threshold distance of the preset dataset and generate the straight line connecting any two touch coordinates among the touch coordinates of the touch coordinate dataset.

Here, the reason for setting the threshold distance of the dataset is that the touch coordinates maintain a certain distance from each other, so that accuracy of straight line generation and suitable straight line selection may be improved, and a time for predicting the motion vector may be minimized.

In addition, when determining the threshold distance of the preset dataset, the touch sensing apparatus 120 may determine the threshold distance of the dataset based on a size of the touch panel.

As an example, the touch sensing apparatus 120 may determine the threshold distance of the dataset by increasing the threshold distance of the dataset when the size of the touch panel increases and decreasing the threshold distance of the dataset when the size of the touch panel decreases.

In some cases, when determining the threshold distance of the preset dataset, the touch sensing apparatus 120 may determine the threshold distance of the dataset based on a dot pitch of the touch panel.

As an example, the touch sensing apparatus 120 may determine the threshold distance of the dataset by increasing the threshold distance of the dataset when the dot pitch of the touch panel increases and decreasing the threshold distance of the dataset when the dot pitch of the touch panel decreases.

In addition, when generating the straight line, the touch sensing apparatus 120 may select any two touch coordinates among the touch coordinates of the touch coordinate dataset, generate the straight line connecting the two selected touch coordinates, count the number of inlier touch coordinates positioned within the reference range from the straight line, check whether a combination of touch coordinates capable of generating the straight line remains among the touch coordinates of the touch coordinate dataset, select touch coordinates of another combination to further generate another straight line when the combination of touch coordinates capable of generating the straight line remains, and terminate the straight line generation when the combination of touch coordinates capable of generating the straight line does not remain.

Here, when selecting any two touch coordinates, the touch sensing apparatus 120 may extract any one touch coordinate pair among a plurality of touch coordinate pairs included in a pre-stored touch coordinate pair table to select two touch coordinates corresponding to the extracted touch coordinate pair.

In this case, the touch sensing apparatus 120 may determine a total number of touch coordinate pairs included in the pre-stored touch coordinate pair table based on a calculation speed of the touch sensing apparatus 120.

As an example, the touch sensing apparatus 120 may determine to increase the total number of touch coordinate pairs included in the pre-stored touch coordinate pair table when the calculation speed of the touch sensing apparatus is higher than a reference speed and determine to decrease the total number of touch coordinate pairs included in the pre-stored touch coordinate pair table when the calculation speed of the touch sensing apparatus is less than the reference speed.

In some cases, when generating the straight line, the touch sensing apparatus 120 may determine a total number of generated straight lines, select any two touch coordinates among the touch coordinates of the touch coordinate dataset when the total number of generate straight lines is determined, generate the straight line connecting the selected two touch coordinates, count the number of inlier touch coordinates positioned within the reference range from the straight line, check whether a number of straight lines generated so far reaches the total number of generated straight lines, select touch coordinates of another combination to further generate another straight line when the number of straight lines generated so far does not reach the total number of generated straight lines, and terminate the straight line generation when the number of straight lines generated so far reaches the total number of generated straight lines.

Here, when determining the total number of generated straight lines, the touch sensing apparatus 120 may determine the total number of generated straight lines based on the calculation speed of the touch sensing apparatus.

As an example, the touch sensing apparatus 120 may determine to increase the total number of generated straight lines when the calculation speed of the touch sensing apparatus is higher than the reference speed and determine to decrease the total number of generated straight lines when the calculation speed of the touch sensing apparatus is less than the reference speed.

Next, when selecting the suitable straight line, the touch sensing apparatus 120 may select a straight line having a largest number of inlier touch coordinates as the suitable straight line based on a number of inlier touch coordinates stored for each straight line.

In some cases, when the suitable straight line having the largest number of inlier touch coordinates is in plural, the touch sensing apparatus 120 may calculate a sum of distances between the suitable straight line and the inlier touch coordinates and select a suitable straight line having a least sum of distances among the plurality of suitable straight lines as a final suitable straight line.

As another case, when the suitable straight line having the least sum of distances is in plural, the touch sensing apparatus 120 may calculate a length value of the corresponding suitable straight line and select a suitable straight line having a longest length value among the plurality of suitable straight lines as the final suitable straight line.

Next, the touch sensing apparatus 120 may determine a point closest to the current coordinate positioned on the selected suitable straight line as the predicted coordinate to predict the motion vector of the touch coordinates.

Here, in comparing a number of inlier touch coordinates of a current frame with a number of inlier touch coordinates of a previous frame, when the number of inlier touch coordinates of the current frame is less than or equal to a maximum reference difference value than the number of inlier touch coordinates of the previous frame, the touch sensing apparatus 120 may determine that the touch drawing event is not a straight line drawing and terminate prediction of the motion vector of the touch coordinates.

As such, the touch sensing apparatus of the present disclosure may increase accuracy of a predicted vector corresponding to straight line drawing and reduce straight line drawing jitter by selecting a suitable straight line from a straight line connecting any two touch coordinates corresponding to the straight line drawing based on a number of inlier touch coordinates positioned within a reference range and the sum of distances between the straight line and the inlier coordinates and predicting a motion vector of the touch coordinates.

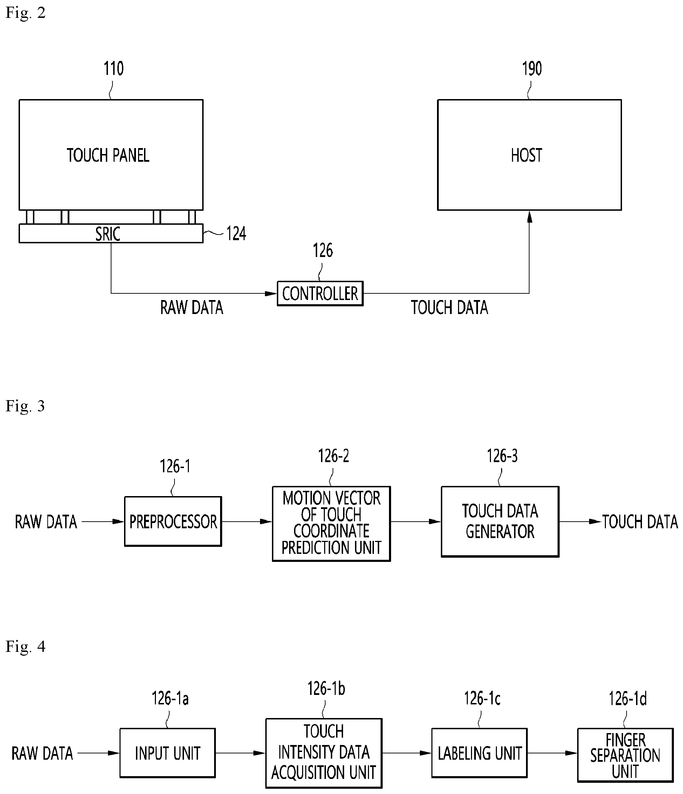

FIG. 2 is a diagram for describing a touch sensing apparatus of a display device according to an embodiment of the present disclosure.

As shown in FIG. 2, the touch sensing apparatus of the present disclosure may include a sensing signal processor 124 configured to detect raw data corresponding to a touch drawing event of a touch panel 110 and a controller 126 configured to generate touch data by predicting a motion vector of touch coordinates based on the detected raw data and transmit the touch data to a host 190.

Here, the sensing signal processor 124 may be composed of a source driver which is a data driver and a source driver touch readout IC (SRIC) in which a touch readout circuit is integrated. However, this is only an embodiment and is not limited thereto.

In addition, the sensing signal processor 124 may further include a read-out circuit unit, an analog-to-digital converter (ADC), a MUX, an arithmetic processor, and the like.

Here, the read-out circuit unit may detect a sensing signal corresponding to the touch drawing event of the touch panel 110.

As an example, the read-out circuit unit include a circuit such as an integrator as a circuit for analogically converting the sensing signal.

In addition, the analog-digital converter may convert the sensing signal into sensing data.

Next, the mux may mux the sensing data to transmit the sensing data to the arithmetic processor.

Next, the calculation processor may perform arithmetic processing of a plurality of sensing data to transmit the raw data to the controller 126.

In addition, the controller 126 may calculate touch coordinates of the raw data when the raw data is input, generate a straight line connecting any two touch coordinates among the calculated touch coordinates, count a number of inlier touch coordinates positioned within a reference range from the straight line, select a suitable straight line based on the number of inlier touch coordinates, and determine a touch coordinate closest to the selected suitable straight line as a predicted coordinate to predict the motion vector of the touch coordinates, and generate touch data corresponding to a straight line drawing event based on the motion vector of the touch coordinates to transmit the touch data to the host 190.

Here, when generating the straight line, the controller 126 may select any two touch coordinates among the touch coordinates of the touch coordinate dataset, generate the straight line connecting the selected two touch coordinates, count the number of inlier touch coordinates positioned within the reference range from the straight line, check whether a combination of touch coordinates capable of generating the straight line remains among the touch coordinates of the touch coordinate dataset, select touch coordinates of another combination to further generate another straight line when the combination of touch coordinates capable of generating the straight line remains, and terminate the straight line generation when the combination of touch coordinates capable of generating the straight line does not remain.

In some cases, when generating the straight line, the controller 126 may determine a total number of generated straight lines, select any two touch coordinates among the touch coordinates of the touch coordinate dataset when the total number of generate straight lines is determined, generate the straight line connecting the selected two touch coordinates, count the number of inlier touch coordinates positioned within the reference range from the straight line, check whether a number of straight lines generated so far reaches the total number of generated straight lines, select touch coordinates of another combination to further generate another straight line when the number of straight lines generated so far does not reach the total number of generated straight lines, and terminate the straight line generation when the number of straight lines generated so far reaches the total number of generated straight lines.

Next, when selecting the suitable straight line, the controller 126 may select a straight line having a largest number of inlier touch coordinates as the suitable straight line based on a number of inlier touch coordinates stored for each straight line.

In some cases, when the suitable straight line having the largest number of inlier touch coordinates is in plural, the controller 126 may calculate a sum of distances between the suitable straight line and the inlier touch coordinates and select a suitable straight line having a least sum of distances among the plurality of suitable straight lines as a final suitable straight line.

As another case, when the suitable straight line having the least sum of distances is in plural, the controller 126 may calculate a length value of the corresponding suitable straight line and select a suitable straight line having a longest length value among the plurality of suitable straight lines as the final suitable straight line.

Next, the controller 126 may determine a point closest to the current coordinate positioned on the selected suitable straight line as the predicted coordinate to predict the motion vector of the touch coordinates.

FIGS. 3 to 6 are diagrams for describing a controller of a touch sensing apparatus according to an embodiment of the present disclosure.

As shown in FIG. 3, the controller of the touch sensing apparatus of the present disclosure may include a preprocessor 126-1, a motion vector of touch coordinate prediction unit 126-2, and a touch data generator 126-3.

Here, the preprocessor 126-1 may preprocess raw data when the raw data is input.

As shown in FIG. 4, the preprocessor 126-1 may include an input unit 126-1a configured to receive the raw data., a touch intensity data acquisition unit 126-1b configured to acquire touch intensity data from the input raw data, a labeling unit 126-1c configured to label the touch intensity data, and a finger separation unit 126-1d configured to perform finger separation based on the labeled touch intensity data.

Here, when performing the finger separation, the finger separation unit 126-1d may analyze the labeled touch intensity data to search for touch intensity data above a reference value and perform the finger separation when label values of the touch intensity data positioned between the touch intensity data above the reference value gradually decrease and then increase.

As an example, it may be confirmed that the finger separation unit 126-1d may separate around the touch intensity data having a lowest label value when label values of touch intensity data positioned at an X coordinate among the touch intensity data positioned between the touch intensity data above the reference value gradually decrease and then increase.

As another example, it may also be confirmed that the finger separation unit 126-1d may separate around the touch intensity data having the lowest label value when label values of touch intensity data positioned at a Y coordinate among the touch intensity data positioned between the touch intensity data above the reference value gradually decrease and then increase.

As still another example, it may also be confirmed that the finger separation unit 126-1d may separate around the touch intensity data having the lowest label value when label values of touch intensity data positioned at each of the X coordinate and the Y coordinate among the touch intensity data positioned between the touch intensity data above the reference value gradually decrease and then increase.

In some cases, when performing the finger separation, the finger separation unit 126-1d may analyze the labeled touch intensity data to search for the touch intensity data above the reference value, check whether label values of touch intensity data positioned within a certain distance around the touch intensity data above the reference value have a preset label distribution, and perform the finger separation around the touch intensity data above the reference value when having the preset label distribution.

Next, the motion vector of touch coordinate prediction unit 126-2 of FIG. 3 may calculate the touch coordinates based on the preprocessed touch data to predict the motion vector of the touch coordinates.

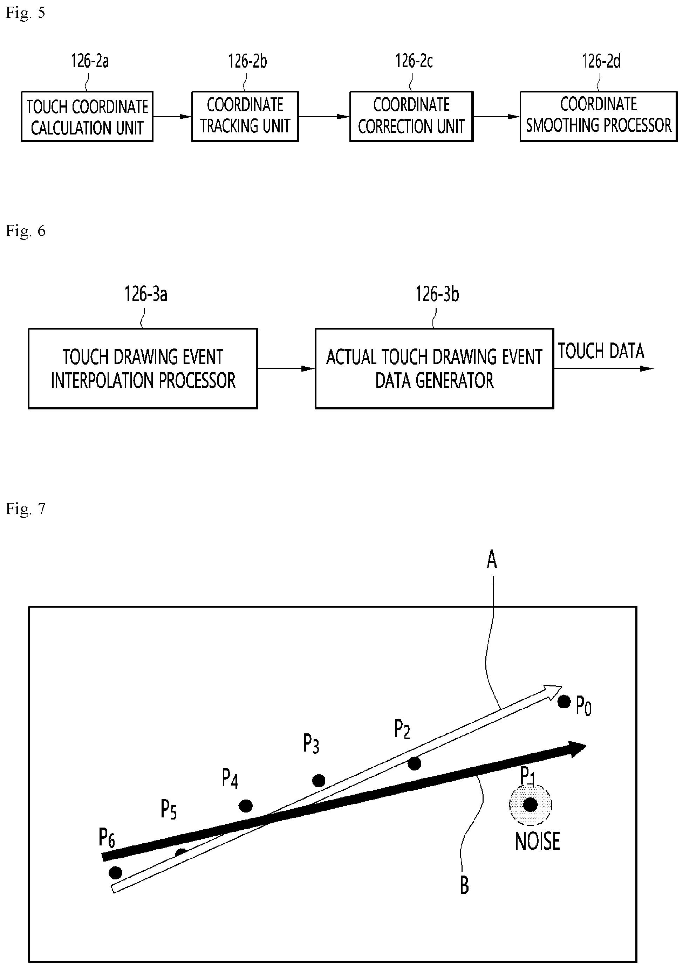

As shown in FIG. 5, the motion vector of touch coordinate prediction unit 126-2 may include a touch coordinate calculation unit 126-2a configured to calculate touch coordinates, a coordinate tracking unit 126-2b configured to track the touch coordinates, a coordinate correction unit 126-2c configured to correct the touch coordinates, and a coordinate smoothing processor 126-2d configured to smooth the corrected touch coordinates.

Here, the coordinate correction unit 126-2c may generate a plurality of straight lines connecting any two touch coordinates among the calculated touch coordinates, determine the suitable straight line among the plurality of straight lines, and correct the touch coordinates based on the determined suitable straight line.

As an example, when determining the suitable straight line, the coordinate correction unit 126-2c may determine the suitable straight line based on at least one of a first determination condition for selecting a straight line having a large number of inlier touch coordinates positioned around the straight line and a second discrimination condition for selecting a straight line having a large number of inlier touch coordinates positioned close to the straight line.

In addition, the coordinate correction unit 126-2c may determine the suitable straight line based on a third determination condition for selecting a straight line having a long length e.

Next, the touch data generator 126-3 of FIG. 3 may generate touch data corresponding to the touch drawing event based on the predicted motion vector.

As shown in FIG. 6, the touch data generator 126-3 may include a touch drawing event interpolation processor 126-3a configured to interpolate the touch data corresponding to the touch drawing event based on the predicted motion vector and an actual touch drawing event data generator 126-3b configured to generate touch data corresponding to an actual touch drawing event based on the interpolated touch data.

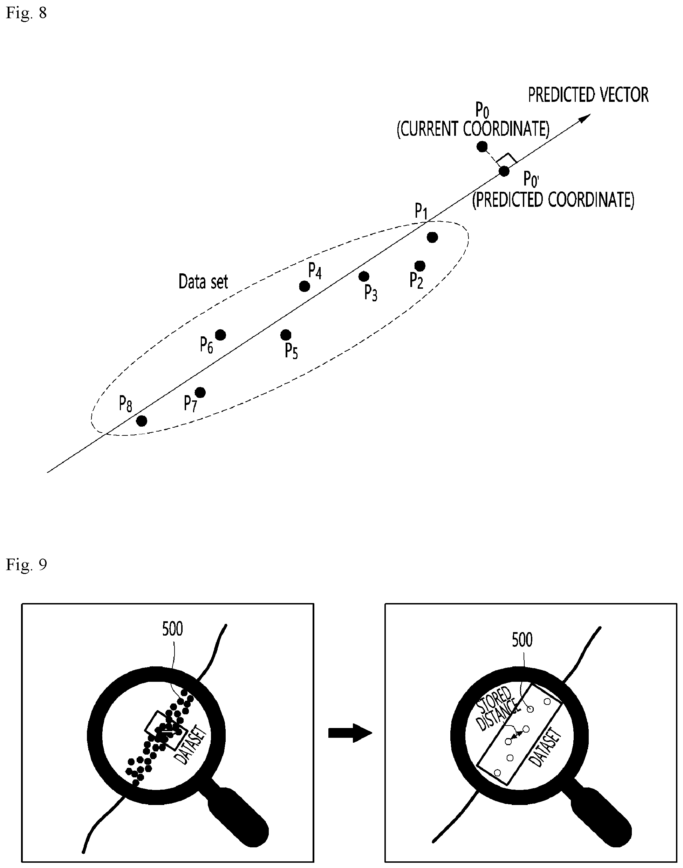

FIGS. 7 and 8 are diagrams for describing a method of predicting a motion vector of touch coordinates according to an embodiment of the present disclosure.

As shown in FIG. 7, when touch coordinates P6 to P2 corresponding to a straight line drawing event are input, a predicted vector of touch coordinates for the straight line drawing event may be predicted as a motion vector such as A having a direction toward P0 when there is no noise such as an outlier touch coordinate P1.

However, the predicted vector of the touch coordinates for the straight line drawing event may be predicted as a motion vector such as B having a direction toward the noise P1 when there is noise such as the outlier touch coordinate P1.

Therefore, when the touch sensing method of the present disclosure is not used, accuracy of the predicted vector corresponding to the straight line drawing may be decreased and of straight line drawing jitter may be increased.

As shown in FIG. 8, the touch sensing method of the present disclosure, when a dataset including touch coordinates P8 to P1 corresponding to the straight line drawing event is input. may increase the accuracy of the predicted vector corresponding to the straight line drawing and reduce the straight line drawing jitter by selecting a suitable straight line from a straight line connecting any two touch coordinates corresponding to the straight line drawing based on a number of inlier touch coordinates positioned within a reference range and a sum of distances between the straight line and the inlier touch coordinates and predicting the motion vector of the touch coordinates.

Here, in the present disclosure, it is possible to know the predicted vector of the touch coordinates by determining a point closest to a current coordinate P0 positioned on the selected suitable straight line as a predicted coordinate P0'.

FIG. 9 is a diagram for describing an effective distance between touch coordinates in a touch coordinate dataset according to an embodiment of the present disclosure.

As shown in FIG. 9, in the present disclosure, when all touch coordinates 500 are stored in the touch coordinate dataset every time touch coordinates 500 are input, accuracy of a predicted vector may be decreased and a time for algorithm execution may be increased in a region where the touch coordinates 500 are dense.

Therefore, in the present disclosure, when the touch coordinates 500 are input, it is possible to calculate a distance between a currently received touch coordinate and a most recently received touch coordinate, and when the calculated distance is greater than a threshold distance of a preset dataset, it is possible to store corresponding touch coordinates in the touch coordinate dataset.

That is, in the present disclosure, only touch coordinates 500 having a stored distance greater than the threshold distance of the preset dataset may be stored in the dataset, and touch coordinates less than the threshold distance of the preset dataset may be discarded without being stored in the dataset.

Here, the reason for setting the threshold distance of the dataset is that the touch coordinates maintain a certain distance from each other, so that the accuracy of straight line generation and suitable straight line selection may be improved, and a time for predicting the motion vector may be minimized.

In the present disclosure, when a distance between input touch coordinates 500 and touch coordinates adjacent thereto is more than a certain distance, the accuracy of the predicted vector may be improved and the time for algorithm execution may be reduced even in the region where the touch coordinates 500 are dense by storing the input touch coordinate in the touch coordinate dataset.

In the present disclosure, when determining the threshold distance of the preset dataset, the threshold distance of the dataset may be determined based on a size of the touch panel.

As an example, in the present disclosure, it is possible to determine the threshold distance of the dataset by increasing the threshold distance of the dataset when the size of the touch panel increases and decreasing the threshold distance of the dataset when the size of the touch panel decreases.

In some cases, in the present disclosure, when determining the threshold distance of the preset dataset, it is possible to determine the threshold distance of the dataset based on a dot pitch of the touch panel.

As an example, in the present disclosure, it is possible to determine the threshold distance of the dataset by increasing the threshold distance of the dataset when the dot pitch of the touch panel increases and decreasing the threshold distance of the dataset when the dot pitch of the touch panel decreases.

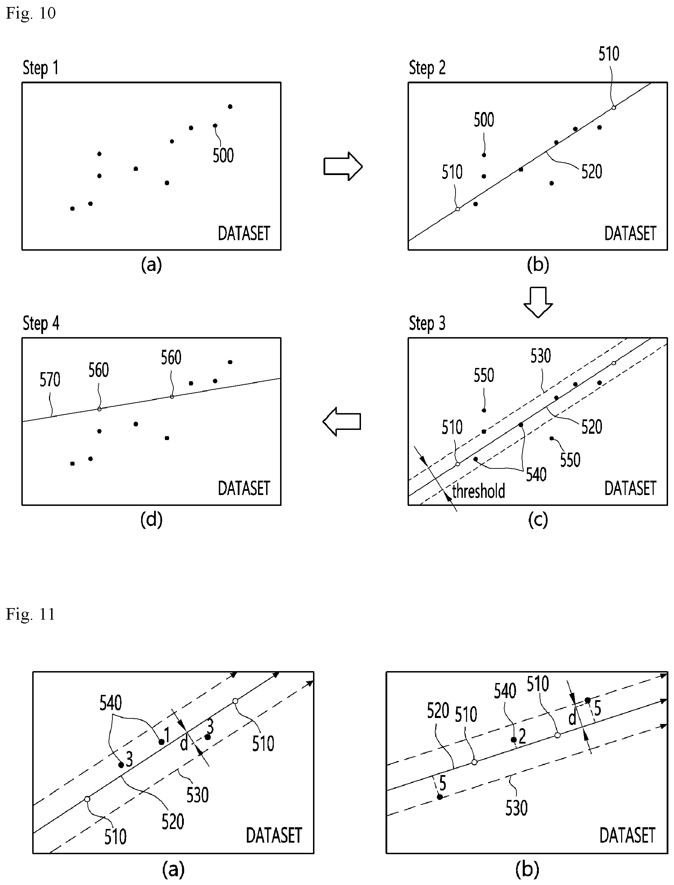

FIG. 10 is a diagram for describing a method for selecting a suitable straight line according to an embodiment of the present disclosure.

As shown in FIG. 10A, in the present disclosure, when receiving touch coordinates 500 corresponding to a straight line drawing event, it is possible to calculate a distance between a currently received touch coordinate and a most recently received touch coordinate from a pre-stored touch coordinate dataset, and when the calculated distance is greater than a threshold distance of a preset dataset, it is possible to store the received touch coordinates 500 in the touch coordinate dataset.

That is, in the present disclosure, touch coordinates greater than the threshold distance of the preset dataset may be stored in the dataset, and touch coordinates less than the threshold distance of the preset dataset may be discarded without storing in the dataset.

Therefore, in the present disclosure, it is possible to update the touch coordinate dataset only with touch coordinates greater than the threshold distance of the preset dataset.

Next, as shown in FIG. 10B, in the present disclosure, it is possible to select any two touch coordinates 510 among the touch coordinates 500 of the touch coordinate dataset and generate a straight line 520 connecting the selected two touch coordinates 510.

Here, in the present disclosure, when selecting any two touch coordinates 510, it is possible to extract any one touch coordinate pair among a plurality of touch coordinate pairs included in a pre-stored touch coordinate pair table to select two touch coordinates corresponding to the extracted touch coordinate pair.

In this case, in the present disclosure, it is possible to determine a total number of touch coordinate pairs included in the pre-stored touch coordinate pair table based on a calculation speed of the touch sensing apparatus.

As an example, in the present disclosure, it is possible to determine to increase the total number of touch coordinate pairs included in the pre-stored touch coordinate pair table when the calculation speed of the touch sensing apparatus is higher than a reference speed and determine to decrease the total number of touch coordinate pairs included in the pre-stored touch coordinate pair table when the calculation speed of the touch sensing apparatus is less than the reference speed.

In some cases, in the present disclosure, it is possible to determine a total number of generated straight lines, select any two touch coordinates 510 among the touch coordinates of the touch coordinate dataset when the total number of generate straight lines is determined, and generate the straight line 520 connecting the selected two touch coordinates 510.

Here, in the present disclosure, when determining the total number of generated straight lines 520, it is possible to determine the total number of generated straight lines 520 based on the calculation speed of the touch sensing apparatus.

As an example, in the present disclosure, when the calculation speed of the touch sensing apparatus is higher than the reference speed, it is possible to determine to increase the total number of generated straight lines 520, and when the calculation speed of the touch sensing apparatus is less than the reference speed, it is possible to determine to decrease the total number of generated straight lines 520.

Next, as shown in FIG. 10C, in the present disclosure, it is possible to count a number of inlier touch coordinates 540 positioned within a threshold range 530 from the straight line 520 and ignore outlier touch coordinates 550 positioned outside the threshold range 530.

In some cases, in the present disclosure, it is possible to calculate a sum of distances between the straight line 520 and the inlier touch coordinates 540.

As another case, in the present disclosure, it is possible to calculate a length value of the straight line 520.

Here, in the present disclosure, it is possible to simultaneously calculate the sum of distances between the straight line 520 and the inlier touch coordinates 540 when counting the number of inlier touch coordinates 540.

In addition, in the present disclosure, it is possible to simultaneously calculate the sum of distances between the straight line 520 and the inlier touch coordinates 540 and the length value of the straight line 520 when counting the number of inlier touch coordinates 540.

In addition, as shown in FIG. 10D, in the present disclosure, it is possible to check whether a combination of touch coordinates capable of generating the straight line remains among the touch coordinates of the touch coordinate dataset, select touch coordinates 560 of another combination to further generate another straight line 570 when the combination of the touch coordinates capable of generating the straight line remains, and terminate the straight line generation when the combination of the touch coordinates capable of generating the straight line does not remain.

In some cases, in the present disclosure, it is possible to check whether a number of straight lines generated so far reaches a total number of generated straight lines when the total number of generated straight lines is determined, select the touch coordinates 560 of another combination to further generate another straight line 570 when the number of straight lines generated so far does not reach the total number of generated straight lines, and terminate the straight line generation when the number of straight lines generated so far reaches the total number of generated straight lines.

Here, in the present disclosure, it is possible to repeatedly perform a process of counting a number of inlier touch coordinates positioned within the threshold range from another straight line 570 and calculating a sum of distances between the straight line and the inlier touch coordinates.

Next, in the present disclosure, it is possible to select one suitable straight line from a plurality of straight lines.

Here, in the present disclosure, it is possible to select a straight line having a largest number of inlier touch coordinates as the suitable straight line based on a number of inlier touch coordinates stored for each straight line.

In some cases, in the present disclosure, when the suitable straight line having the largest number of inlier touch coordinates is in plural, it is possible to calculate the sum of distances between the suitable straight line and the inlier touch coordinates and select a suitable straight line having a least sum of distances among the plurality of suitable straight lines as a final suitable straight line.

As another case, in the present disclosure, when the suitable straight line having the least sum of distances is in plural, it is possible to calculate a length value of the corresponding suitable straight line and select a suitable straight line having a longest length value among the plurality of suitable straight lines as the final suitable straight line.

Next, in the present disclosure, it is possible to determine a point closest to the current coordinate positioned on the selected suitable straight line as the predicted coordinate to predict the motion vector of the touch coordinates.

FIG. 11 is a diagram for describing a method for selecting a suitable straight line according to another embodiment of the present disclosure.

As shown in FIGS. 11A and 11B, in the present disclosure, it is possible to select any two touch coordinates 510 among the touch coordinates of the touch coordinate dataset and generate a straight line 520 connecting the selected two touch coordinates 510.

In addition, in the present disclosure, it is possible to count a number of inlier touch coordinates 540 positioned within a threshold range 530 from the straight line 520.

Here, in the present disclosure, it is possible to select a straight line having a largest number of inlier touch coordinates as the suitable straight line based on a number of inlier touch coordinates stored for each straight line, and as shown in FIGS. 11A and 11B, when the straight line 520 having the same number of inlier touch coordinates is in plural, it is possible to calculate a sum of distances d between the straight line 520 and the inlier touch coordinates 540.

It can be seen that the sum of the distances d between the straight line 520 and the inlier touch coordinate 540 is 7 (3 + 1 + 3) in the case of FIG. 11A and the sum of the distances d between the straight line 520 and the inlier touch coordinates 540 is 12 (5 + 3 + 5) in the case of FIG. 11B.

Therefore, in the present disclosure, it is possible to select a straight line having a least sum of distances d between the straight line 520 and the inlier touch coordinates 540 as shown in FIG. 11A among two straight lines 520 having the same number of inlier touch coordinates 540 as a final suitable straight line.

As such, in the present disclosure, when the straight line having the largest number of inlier touch coordinates is in plural, it is possible to select a straight line having a least sum of distances among the plurality of straight lines as a suitable straight line.

As another case, in the present disclosure, when the suitable straight line having the least sum of distances is in plural, it is possible to calculate a length value of the corresponding suitable straight line and select a suitable straight line having a longest length value among the plurality of suitable straight lines as the final suitable straight line.

Therefore, in the present disclosure, it is possible to increase the accuracy of the predicted vector corresponding to the straight line drawing to reduce straight line drawing jitter by selecting a straight line having the least noise.

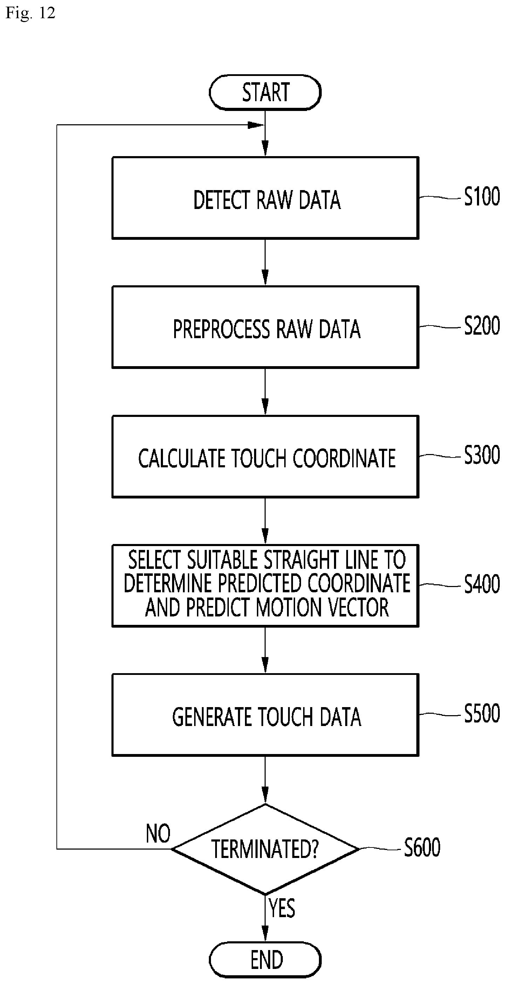

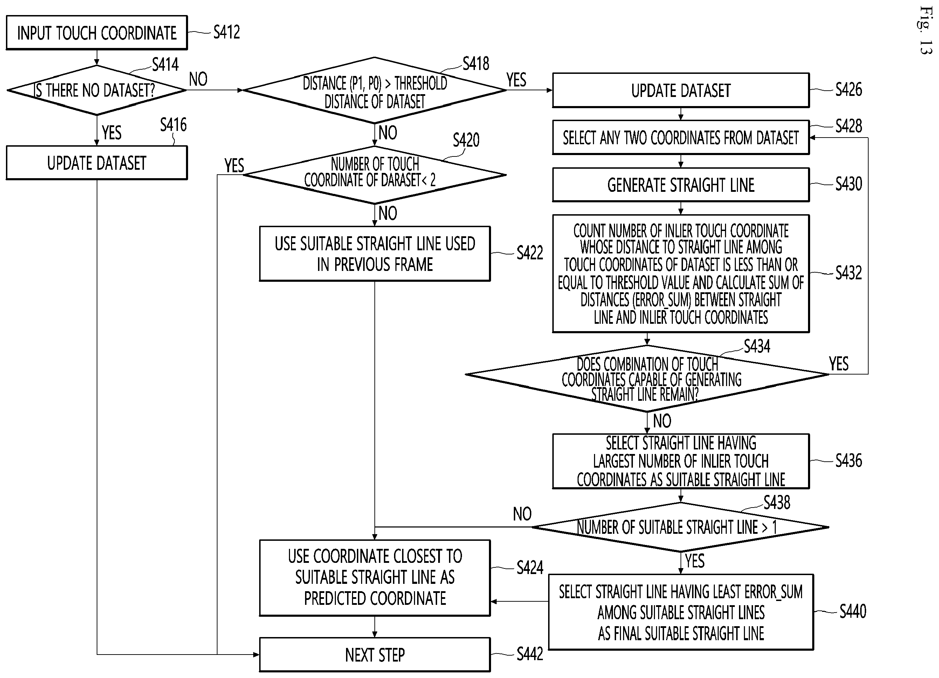

FIGS. 12 and 13 are diagrams for describing a touch sensing method of a touch sensing apparatus according to an embodiment of the present disclosure.

As shown in FIG. 12, in the present disclosure, it is possible to detect raw data corresponding to a touch drawing event of a touch panel (S100).

In addition, in the present disclosure, it is possible to preprocess the raw data (S200).

Here, in the present disclosure, it is possible to acquire touch intensity data from the raw data, label the touch intensity data, and perform finger separation based on the labeled touch intensity data.

Next, in the present disclosure, it is possible to calculate touch coordinates of the raw data (S300).

Next, in the present disclosure, it is possible to generate a straight line connecting any two touch coordinates among the calculated touch coordinates, count a number of inlier touch coordinates positioned within a reference range from the straight line, select a suitable straight line based on the number of inlier touch coordinates, and determine a touch coordinate closest to the selected suitable straight line as a predicted coordinate to predict a motion vector of the touch coordinates (S400).

In some cases, in the present disclosure, when selecting a suitable straight line, it is possible to count the number of inlier touch coordinates positioned within the reference range from the straight line, calculate a sum of distances between the suitable straight line and the inlier touch coordinates, and select a suitable straight line based on the number of inlier touch coordinates and the sum of distances.

That is, in the present disclosure, it is possible to firstly select a straight line having a largest number of inlier touch coordinates among the plurality of straight lines as the suitable straight line, and when the suitable straight line having the largest number of inlier touch coordinates is in plural, it is possible to secondarily select a suitable straight line having a least sum of distances among the plurality of suitable straight lines as a final suitable straight line.

In addition, in the present disclosure, it is possible to generate touch data corresponding to the touch drawing event based on the predicted motion vector (S500).

Here, in the present disclosure, it is possible to interpolate the touch data corresponding to the touch drawing event based on the predicted motion vector and generate touch data corresponding to an actual touch drawing event based on the interpolated touch data.

Next, in the present disclosure, it is possible to check whether the touch drawing event is terminated (S600) and terminate touch sensing when the touch drawing event is terminated.

Hereinafter, step S400 of predicting the motion vector of the touch coordinates will be described in more detail as follows.

As shown in FIG. 13, in the present disclosure, it is possible to receive touch coordinates of the raw data corresponding to the touch drawing event (S412).

In addition, in the present disclosure, it is possible to check whether a pre-stored touch coordinate dataset exists (S414).

Next, in this disclosure, when the pre-stored touch coordinate dataset does not exist, it is possible to update the touch coordinate dataset based on the received touch coordinates (S416).

Here, in the present disclosure, when the pre-stored touch coordinate dataset exists, it is possible to calculate a distance between a currently received touch coordinate P0 and a most recently received touch coordinate P1 from the pre-stored touch coordinate dataset and check whether the calculated distance is greater than a threshold distance of a preset dataset (S418).

As an example, in the present disclosure, it is possible to determine the threshold distance of the dataset based on a size of the touch panel.

That is, in the present disclosure, it is possible to determine the threshold distance of the dataset by increasing the threshold distance of the dataset when the size of the touch panel increases and decreasing the threshold distance of the dataset when the size of the touch panel decreases.

As another example, in the present disclosure, it is possible to determine the threshold distance of the dataset based on a dot pitch of the touch panel.

That is, in the present disclosure, it is possible to determine the threshold distance of the dataset by increasing the threshold distance of the dataset when the dot pitch of the touch panel increases and decreasing the threshold distance of the dataset when the dot pitch of the touch panel decreases.

Next, in the present disclosure, when the calculated distance is less than or equal to the threshold distance of the preset dataset, it is possible to confirm whether a number of touch coordinates of the preset dataset is less than two (S420).

Here, in the present disclosure, when the number of touch coordinates of the preset dataset is less than two, it is possible to perform a next step without predicting the motion vector of the touch coordinates (S442).

However, in the present disclosure, when the number of touch coordinates in the preset dataset is two or more, it is possible to predict the motion vector of the touch coordinates using a suitable straight line used in a previous frame (S422) without generating a new straight line.

That is, in the present disclosure, it is possible to determine a touch coordinate closest to the suitable straight line used in the previous frame as the predicted coordinate to predict the motion vector of the touch coordinates (S424).

Meanwhile, in the present disclosure, in step S418, when the calculated distance is greater than the threshold distance of the preset dataset, it is possible to update the pre-stored touch coordinate dataset based on the currently received touch coordinates (S426).

Next, in the present disclosure, it is possible to select any two touch coordinates among the touch coordinates of the touch coordinate dataset (S428).

Here, in the present disclosure, it is possible to extract any one touch coordinate pair among a plurality of touch coordinate pairs included in a pre-stored touch coordinate pair table to select two touch coordinates corresponding to the extracted touch coordinate pair.

As an example, in the present disclosure, it is possible to determine a total number of touch coordinate pairs included in the pre-stored touch coordinate pair table based on a calculation speed of the touch sensing apparatus.

That is, in the present disclosure, it is possible to determine to increase the total number of touch coordinate pairs included in the pre-stored touch coordinate pair table when the calculation speed of the touch sensing apparatus is higher than a reference speed and determine to decrease the total number of touch coordinate pairs included in the pre-stored touch coordinate pair table when the calculation speed of the touch sensing apparatus is less than the reference speed.

Next, in the present disclosure, it is possible to generate the straight line connecting the selected two touch coordinates (S430).

In addition, in the present disclosure, it is possible to count the number of inlier touch coordinates positioned within the reference range from the straight line (S432).

Here, in the present disclosure, it is possible to simultaneously calculate the sum of distances between the straight line and the inlier touch coordinates when counting the number of inlier touch coordinates.

In some cases, in the present disclosure, it is possible to simultaneously calculate the sum of distances between the straight line and the inlier touch coordinates and a length value of the straight line when counting the number of inlier touch coordinates.

Next, in the present disclosure, it is possible to check whether a combination of touch coordinates capable of generating the straight line remains among the touch coordinates of the touch coordinate dataset (S434).

Here, in the present disclosure, when the combination of the touch coordinates capable of generating the straight line remains, it is possible to repeatedly perform steps S428 to S432 of selecting touch coordinates of another combination to further generate another straight line and counting the number of inlier touch coordinates.

In some cases, in the present disclosure, when a total number of generated straight lines has been predetermined, it is possible to check whether a number of straight lines generated so far reaches the total number of generated straight lines, and when the number of straight lines generated so far does not reach the total number of generated straight lines, it is possible to repeatedly perform the steps S428 to S432.

Here, in the present disclosure, it is possible to determine the total number of generated straight lines based on the calculation speed of the touch sensing apparatus.

That is, in the present disclosure, when the calculation speed of the touch sensing apparatus is higher than the reference speed, it is possible to determine to increase the total number of generated straight lines, and when the calculation speed of the touch sensing apparatus is less than the reference speed, it is possible to determine to decrease the total number of generated straight lines.

Next, in the present disclosure, when the combination of the touch coordinates capable of generating the straight line does not remain, it is possible to terminate the straight line generation, and to select a straight line having a largest number of inlier touch coordinates as the suitable straight line based on a number of inlier touch coordinates stored for each straight line (S436).

In addition, in the present disclosure, it is possible to check whether the suitable straight lines having the largest number of inlier touch coordinates is in plural (S438).

Next, in the present disclosure, when the suitable straight line having the largest number of inlier touch coordinates is in plural, it is possible to select a suitable straight line having a least sum of distances (error sum) between the straight line and the inlier touch coordinates as a final suitable straight line (S440).

In some cases, in the present disclosure, when the suitable straight line having the least sum of distances is in plural, it is possible to calculate a length value of the corresponding suitable straight line and select a suitable straight line having a longest length value among the plurality of suitable straight lines as the final suitable straight line.

Next, in the present disclosure, it is possible to determine a coordinate closest to the final suitable straight line as the predicted coordinate to predict the motion vector of the touch coordinates (S424).

As such, in the present disclosure, it is possible to increase an accuracy of a predicted vector corresponding to straight line drawing and reduce straight line drawing jitter by selecting an adapted straight line from a straight line connecting any two touch coordinates corresponding to the straight line drawing based on a number of inlier touch coordinates positioned within a reference range and a sum of distances between the straight line and the inlier coordinates and predicting a motion vector of the touch coordinates.

The present disclosure described above may be implemented as computer-readable code on a program-recorded medium. A computer-readable media includes all types of recording devices in which data may be read by a computer system is stored. As an example of the computer-readable media, there are a hard disk drive (HDD), a solid-state disk (SSD), a silicon disk drive (SDD), ROM, RAM, CD-ROM, magnetic tape, floppy disk, optical data storage device, and the like. In addition, the computer may include a processor of an artificial intelligence device.

### INDUSTRIAL APPLICABILITY

The touch sensing apparatus according to the present disclosure has remarkable industrial applicability because of having the effect of increasing an accuracy of a predicted vector corresponding to straight line drawing and reducing straight line drawing jitter by selecting an adapted straight line from a straight line connecting any two touch coordinates corresponding to the straight line drawing based on a number of inlier touch coordinates positioned within a reference range and a sum of distances between the straight line and the inlier coordinates and predicting a motion vector of the touch coordinates.

## Claims

1. A touch sensing apparatus configured to process a touch of a touch panel, the touch sensing apparatus comprising:
a sensing signal processor configured to detect raw data corresponding to a touch drawing event of the touch panel; and
a controller configured to generate touch data by predicting a motion vector of touch coordinates based on the detected raw data,
wherein the controller calculates touch coordinate of the raw data when the raw data is input, generates a straight line connecting any two touch coordinates among the calculated touch coordinates, counts a number of inlier touch coordinates positioned within a reference range from the straight line, selects a suitable straight line based on the number of inlier touch coordinates, and determines a touch coordinate closest to the selected suitable straight line as a predicted coordinate to predict the motion vector of the touch coordinates.

2. The touch sensing apparatus of claim 1, wherein, when generating the straight line, the controller calculates a distance between a currently received touch coordinate and a most recently received touch coordinate from a pre-stored touch coordinate dataset when receiving the calculated touch coordinates and generates a straight line connecting any two touch coordinates among the touch coordinates of the touch coordinate dataset when the calculated distance is greater than a threshold distance of a preset dataset.

3. The touch sensing apparatus of claim 2, wherein, when calculating the distance, the controller checks whether the pre-stored touch coordinate dataset does not exist when receiving the touch coordinates, updates the touch coordinate dataset based on the received touch coordinates when the pre-stored touch coordinate dataset does not exist, and calculates the distance between the received touch coordinate and the most recently received touch coordinate from the pre-stored touch coordinate dataset when the pre-stored touch coordinate dataset exists.

4. The touch sensing apparatus of claim 2, wherein, when the calculated distance is less than or equal to the threshold distance of the preset dataset, the controller determines whether to use a straight line of a previous frame without generating a new straight line based on a number of touch coordinates of the preset dataset.

5. The touch sensing apparatus of claim 2, wherein the controller updates the pre-stored touch coordinate dataset based on the currently received touch coordinate when the calculated distance is greater than the threshold distance of the preset dataset.

6. The touch sensing apparatus of claim 1, wherein, when generating the straight line, the controller selects any two touch coordinates among the touch coordinates of the touch coordinate dataset, generates the straight line connecting the selected two touch coordinates, counts the number of inlier touch coordinates positioned within the reference range from the straight line, checks whether a combination of touch coordinates capable of generating the straight line remains among the touch coordinates of the touch coordinate dataset, selects touch coordinates of another combination to further generate another straight line when the combination of touch coordinates capable of generating the straight line remains, and terminates the straight line generation when the combination of touch coordinates capable of generating the straight line does not remain.

7. The touch sensing apparatus of claim 1, wherein, when counting the number of inlier touch coordinates, the controller counts the number of inlier touch coordinates positioned within the reference range from the straight line to store the number of inlier touch coordinates for each straight line, checks whether a combination of touch coordinates capable of generating the straight line remains among the touch coordinates of the touch coordinate dataset, selects touch coordinates of another combination to further generate another straight line when the combination of touch coordinates capable of generating the straight line remains, and counts a number of inlier touch coordinates relative to the additionally generated another straight line.

8. The touch sensing apparatus of claim 1, wherein, when selecting the suitable straight line, the controller selects a straight line having a largest number of inlier touch coordinates as the suitable straight line based on the number of inlier touch coordinates stored for each straight line.

9. The touch sensing apparatus of claim 8, wherein, when the suitable straight line having the largest number of inlier touch coordinates is in plural, the controller calculates a sum of distances between the suitable straight line and the inlier touch coordinates and selects a suitable straight line having a smallest total distance among the plurality of suitable straight lines as a final suitable straight line.

10. A touch sensing method of a touch sensing apparatus configured to process a touch of a touch panel, the touch sensing method comprising:
detecting raw data corresponding to a touch drawing event of the touch panel;
preprocessing the raw data;
calculating touch coordinates of the raw data;
generating a straight line connecting any two touch coordinates among the calculated touch coordinates;
counting a number of inlier touch coordinates positioned within a reference range from the straight line to select a suitable straight line based on the number of the inlier touch coordinates;
determining a touch coordinate closest to the selected suitable straight line as a predicted coordinate to predict a motion vector of the touch coordinates; and
generating touch data corresponding to the touch drawing event based on the predicted motion vector.
